# EUROPEAN PATENT APPLICATION

(11) **EP 4 530 683 A2**
(43) Date of publication of application: **02.04.2025**
(21) Application number: 24198103.4
(22) Date of filing: 03.09.2024
(51) Int. Cl.: G02B 3/00, G02B 13/00

(54) **MICROLENS ARRAY LAMINATE, OPTICAL DEVICE AND LIDAR SENSOR UNIT**

(30) Priority: 06.09.2023 CN 202311141909; 02.07.2024 CN 202410874831
(71) Applicant: YK Solution Co. Ltd., Kitakyusyu-Shi Fukuoka (JP)
(72) Inventor: YOSHIDA, Kunio, FUKUOKA (JP); YAMAKI, Shigeru, Chiba (JP)
(74) Representative: Meyer-Dulheuer MD Legal Patentanwälte PartG mbB

(57) **Abstract**

The present application provides an improved microlens array laminate, an optical device, and a LiDAR sensor unit that do not rely on a spot bonding method. In one embodiment, provided is a microlens array laminate formed by bonding a plurality of microlens arrays, each of the plurality of microlens arrays being obtained by spreading a microlens in a planar shape. An adhesive sheet is disposed between the bonded microlens arrays. The bonded microlens arrays are in surface bonding with the adhesive sheet interposed therebetween. The adhesive sheet is preferably formed with an opening to ensure an optical path of the microlens. The adhesive sheet is preferably a light-absorbing material (a black material or the like). In the other embodiment, an adhesive sheet is applied to an optical device in which a lens laminate is formed by bonding a plurality of types of microlenses and an image sensor is disposed at a bottom of the lens laminate. The adhesive sheet and adjacent optical components thereto are in surface bonding. The adhesive sheet functions as a spacer for adjusting a unit gap.

## Description

### Technical Field

The present application relates to a microlens array laminate, an optical device, and a LiDAR sensor unit, especially a microlens array laminate, an optical device, and a LiDAR sensor unit produced based on a wafer level optics (WLO) technique.

### Background Art

In manufacturing of such a microlens optical device, there is a process of bonding microlens arrays to form a microlens array laminate. In the laminate forming process, a plurality of microlens arrays are prepared and bonded to each other, each of the plurality of microlens arrays being obtained by spreading a microlens in a planar shape. In the prior art, an adhesive is applied to each microlens located on a plane of each microlens array in a spot shape, and the microlens arrays are bonded to each other using an adhesive force of the adhesive.

In addition, in manufacturing such a microlens optical device, a camera-type optical device is sometimes produced as a final product. In the prior art, in such a camera-type optical device, a spacer is provided between a lens laminate (a microlens array laminate) and an image sensor. The spacer adjusts a unit gap to be fixed, thereby functioning to improve a method for imaging on a surface of the image sensor. In the prior art, the adhesive is applied to a spot of the spacer corresponding to each unit of the image sensor, and the spacer is bonded to adjacent optical components thereto using an adhesive force of the adhesive.

In addition, since traditional photolithography cannot process fine holes and cannot achieve high light-shielding properties, it is impossible to manufacture thin optical elements with high light-shielding properties. In particular, a distance sensor used in a LiDAR sensor unit or the like is required to have a high light-shielding property.

### Citation List

Patent Literature 1: JP2014-089230A
Patent Literature 2: WO2020/145091

### Summary of the Invention

The inventor has found that there is room for improvement in the microlens array laminate in the prior art that relies on the spot bonding method. In addition, the inventor has found that there is room for improvement in the optical device in the prior art that relies on the spot bonding method.

Therefore, an object of the present application is to provide an improved microlens array laminate that does not rely on a spot bonding method. Therefore, an object of the present application is to provide an improved optical device that does not rely on a spot bonding method.

In a first aspect of the present application,
provided is a microlens array laminate formed by bonding a plurality of microlens arrays, each of the plurality of microlens arrays being obtained by spreading a microlens in a planar shape, in which
an adhesive sheet is disposed between the bonded microlens arrays, and
the bonded microlens arrays are bonded by the adhesive sheet.

In one embodiment, the adhesive sheet is configured to cover a bonding area, which is an area of the bonded microlens arrays other than an area corresponding to each microlens.

In one embodiment, the adhesive sheet is made of a light-absorbing material, such as a black material. The adhesive sheet made of the light-absorbing material has an effect of reducing ghosting and glare of an image.

In a second aspect of the present application,
provided is an optical device in which a lens laminate is formed by bonding a plurality of types of microlenses, in which
a first adhesive sheet forming a surface bonding area is disposed between a lowermost microlens of the lens laminate and adjacent optical components,
the first adhesive sheet is made of a light-absorbing material,
the first adhesive sheet and the adjacent optical components are in surface bonding, and
the first adhesive sheet functions as a spacer for adjusting a unit gap.

In one embodiment, an image sensor is disposed at a bottom of the lens laminate, and an opening is formed in the first adhesive sheet to ensure an optical path between the lowermost microlens and the image sensor.

In one embodiment, an image sensor is disposed at a bottom of the lens laminate, and one of the adjacent optical components is the lowermost microlens, and the other of the adjacent optical components is a glass cover adjacent to the first adhesive sheet and disposed on the image sensor.

In one embodiment, the adhesive sheet is made of a black material.

In one embodiment, a second adhesive sheet forming a surface bonding area is disposed between an uppermost microlens of the lens laminate and an optical component adjacent to the uppermost microlens,
the second adhesive sheet is made of a light-absorbing material,
the second adhesive sheet is in surface bonding to the uppermost microlens and the microlens adjacent to the uppermost microlens, and
the second adhesive sheet functions as a diaphragm for gathering light in the optical device.

In one embodiment, the first adhesive sheet and the second adhesive sheet are black.

In one embodiment, provided is a LiDAR sensor unit equipped with the optical device. Hereinafter, preferred embodiments of the present application will be described in detail with reference to the accompanying drawings.

### Descriptions of the Drawings

FIG. 1 illustrates a lens molding process of a microlens optical device.
FIG. 2 illustrates a curing process of the microlens optical device.
FIG. 3 illustrates a demolding process of the microlens optical device.
FIG. 4 illustrates a lens bonding process of the microlens optical device.
FIG. 5 illustrates a cutting process performed on a microlens array laminate produced by the lens bonding process illustrated in FIG. 4.
FIG. 6 illustrates a microlens laminate produced by the cutting process illustrated in FIG. 5.
FIG. 7 illustrates a spot bonding method in the prior art.
FIG. 8 is a top view illustrating bonding spots in the spot bonding method in the prior art.
FIG. 9 is a top view simultaneously illustrating a microlens and transparent and black adhesive sheets arranged for the microlens.
FIG. 10 is a top view illustrating a black or light-absorbing adhesive sheet formed with an opening applied to a microlens array.
FIG. 11 illustrates a camera-type optical device in which a spacer is disposed between a lens laminate and an image sensor.
FIG. 12 illustrates an embodiment of the camera-type optical device in which an adhesive sheet functioning as a spacer is disposed instead of the spacer.
FIG. 13 illustrates an optical device in the prior art.
FIG. 14 illustrates an optical device in which a diaphragm is disposed between microlenses.
FIG. 15 illustrates the diaphragm.
FIG. 16 illustrates an embodiment of the optical device in which the adhesive sheet functions as a spacer and the diaphragm is disposed between the microlenses.
FIG. 17 is an exploded view of the optical device in which the adhesive sheet functions as a spacer and the diaphragm is disposed between the microlenses.

### Detailed Description

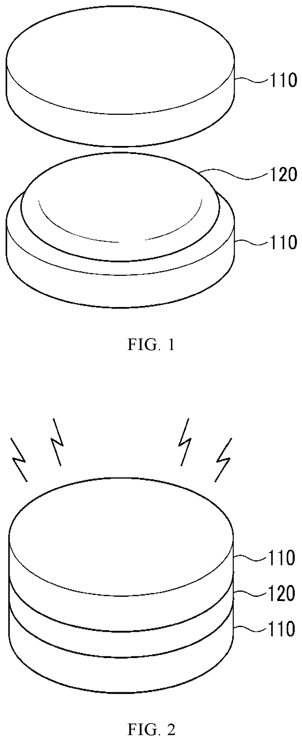

Various steps of wafer level optics (WLO) are described with reference to FIGS. 1 to 6.

First, through a lens molding process (FIG. 1), a resin 120 is disposed between upper and lower molds (molds of a microlens array) 110.

The resin 120 is then cured by thermal or UV through a curing process (FIG. 2).

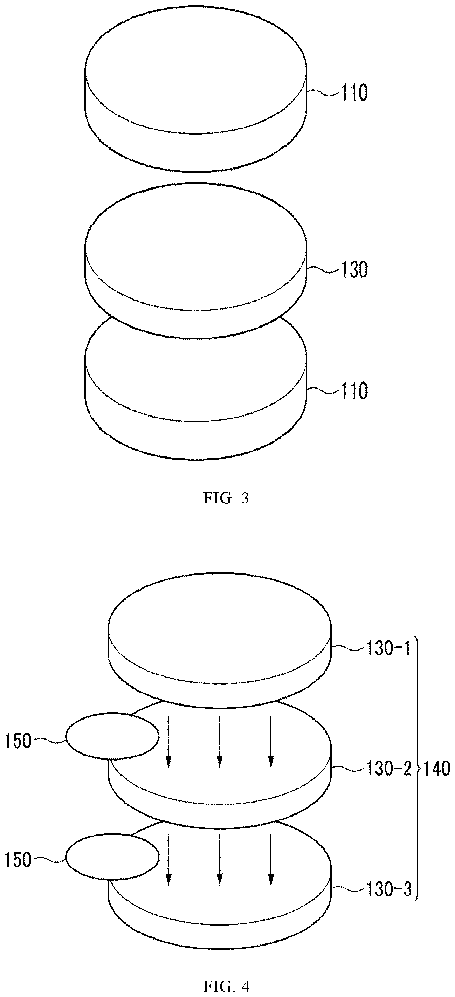

Next, through a demolding process (FIG. 3), the molds 110 are removed, and a microlens array 130 as a cured resin is taken out. Here, the microlens array 130 constitutes a planar micro-optical element in which a microlens are spread in a planar or two-dimensional shape.

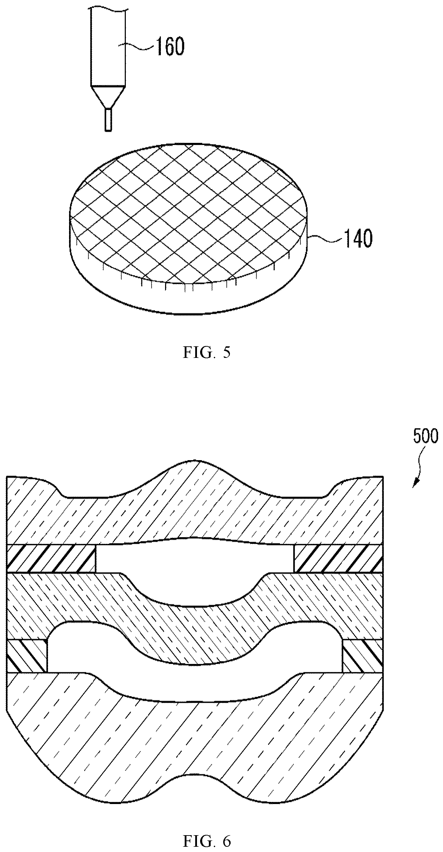

Next, through a bonding process (FIG. 4), a plurality of (two or more) microlens arrays 130-1, 130-2, 130-3, and the like are bonded using an adhesive to produce a microlens array laminate 140 (see FIG. 5). In the bonding process, the bonding is performed by a spot bonding method in the prior art, but in the present application, an adhesive sheet 150 is used to perform bonding by a surface bonding method.

Next, a cutting process (FIG. 5) is performed on the microlens array laminate 140 by a cutting device 160, and the microlens array laminate 140 is cut into chip-like lens modules for each lens. As the cutting device 160, a device that performs cutting using a laser or a device that performs cutting using a blade is used. A plurality of types of lens modules are bonded to form a lens laminate, thereby producing a camera-type optical device 500 in which an image sensor is disposed at a bottom of the lens laminate (see FIG. 6).

### Bonding Technique Using Adhesive Sheet ··· Microlens Array Laminate

First, the present application relates to the microlens array laminate 140 produced through the bonding process (FIG. 4) of the microlens arrays (130-1, 130-2, 130-3, and the like).

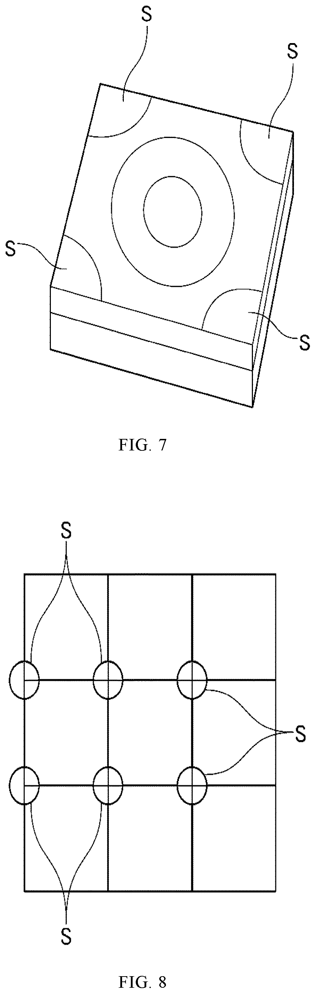

In the prior art, when a plurality of microlens arrays are bonded, as illustrated in FIG. 7 and FIG. 8, an adhesive is applied to four corners S of each microlens partition in a spot shape to perform bonding. FIG. 7 illustrates one microlens partition whose four corners S are applied with the adhesive in a spot shape. In practice, for example, as illustrated in FIG. 8, corners (represented by a circle formed by a 90 degree sector × 4 sectors for four adjacent partitions) of microlens partitions in the microlens array laminate are applied with the adhesive in a spot shape. In the case of the spot bonding method, since an area of a spot bonding area is smaller than an area of the microlens partition, it is difficult to ensure a sufficient bonding force. In addition, in an application where 20,000 microlenses are spread in an array shape in a 200 mm wafer, the number of bonding spots reaches 80,000, and therefore, the bonding operation is demanding. In addition, there is a problem that the adhesive may overflow to a location deviating from a desired spot bonding area, resulting in a decrease in yield.

In contrast to the spot bonding method, in the present application, the adhesive sheet 150 (see FIG. 4) providing a surface bonding area is used between the bonded microlens arrays.

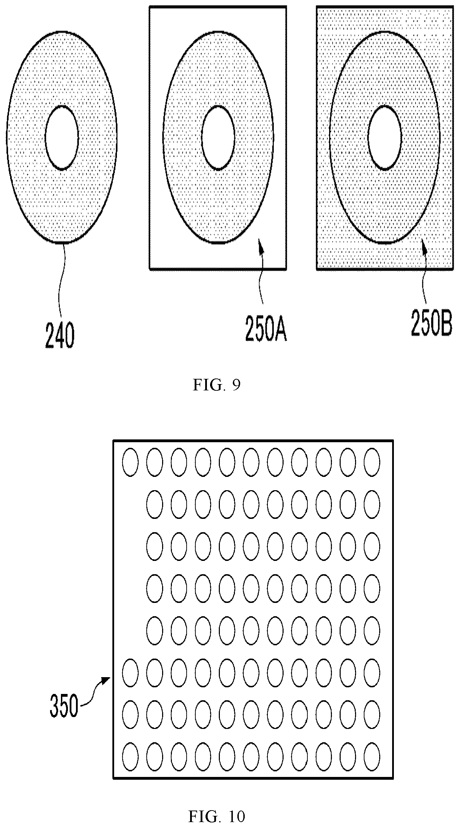

FIG. 9 is an explanatory diagram illustrating how an adhesive sheet is disposed on one microlens. A portion shown on a left side of FIG. 9 is a simplified portion of one microlens 240 itself. A portion shown at a center of FIG. 9 is an adhesive sheet 250A disposed on a surface surrounding one microlens. The adhesive sheet 250A may be made of a transparent material, but is preferably made of a light-absorbing material. In addition, the microlenses may be bonded in a heated state, and the adhesive sheet 250A is preferably made of a material that exhibits required adhesiveness in a heated state.

A portion shown on a right side of FIG. 9 is a light-absorbing adhesive sheet, such as a black adhesive sheet 250B, disposed on a surface surrounding one microlens.

Preferably, the adhesive sheets 250A and 250B are formed with openings so that there is no adhesive sheet 250A, 250B in the area corresponding to the microlens 240. The openings of the adhesive sheets 250A, 250B provide an optical path for the microlens. Particularly, in a case where the adhesive sheet is made of a light-absorbing material (for example, a black material), the transmitted light of the lens substantially passes through the openings, so that the transmitted light of the lens with less ghosting and glare can be provided.

As compared with the spot bonding method (FIG. 7 and FIG. 8), in the bonding of the microlens arrays using the adhesive sheet (FIG. 9), a bonding area becomes larger, so that the microlens arrays can be reliably bonded to each other.

FIG. 10 illustrates a specific example of an adhesive sheet 350 used in a microlens array. An opening is formed at a portion of the microlens array corresponding to each microlens. In the example of FIG. 10, it is assumed that a periphery of the microlens array is rectangular, but if the periphery of the microlens array is circular, an adhesive sheet with a circular periphery can be used in accordance with the shape of the microlens array. An opening of the adhesive sheet 350 can be formed by laser, for example.

### Spacer Installation Using Adhesive Sheet ··· Optical Device

Second, the present application relates to an optical device, especially, a camera-type optical device in which a plurality of types of microlenses are bonded to form a lens laminate and an image sensor is disposed at a bottom of the lens laminate (see FIG. 6). The camera-type optical device is known to have various applications, and the present application can be applied to various applications. Examples of the applications include an application of a 3D camera for facial authentication, an application of augmented reality (AR) and virtual reality (VR) that can be used in dark places through infrared sensors, an endoscope application, and a distance measurement application for distance adjustment between cars.

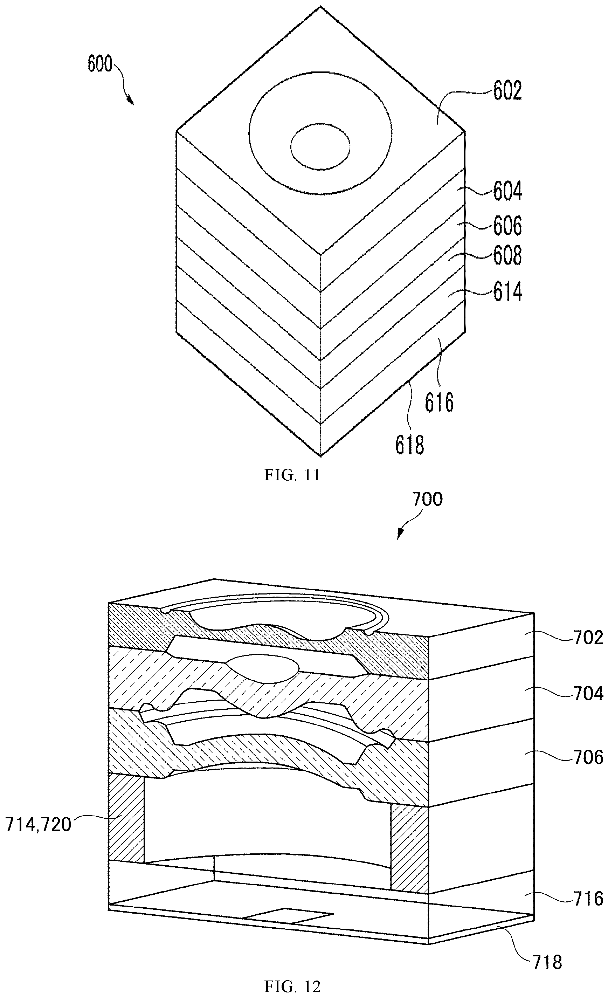

The camera-type optical device is represented in FIGS. 11 and 12 by reference numerals 600 and 700. In the camera-type optical device, a spacer is provided between the lens laminate and the image sensor.

In a camera-type optical device 600 of FIG. 11, a lens laminate is formed by bonding microlenses 602, 604, 606, and 608, and an image sensor 618 is disposed at a bottom of the camera-type optical device 600. A spacer 614 is disposed between the image sensor 618 and the lowermost microlens 608 of the lens laminate, preferably between a glass cover 616 disposed on the image sensor 618 and the microlens 608, so that a unit gap is adjusted to be fixed. In the prior art, optical components (the glass cover 616 and the microlens 608) adjacent to the spacer 614 are bonded by an adhesive.

In a camera-type optical device 700 of FIG. 12, a lens laminate is formed by bonding microlenses 702, 704, and 706, and an image sensor 718 is disposed at a bottom of the camera-type optical device 700. A spacer 714 is disposed between the image sensor 718 and the lowermost microlens 706 of the lens laminate (a lowermost layer of the lens laminate), preferably between a glass cover 716 disposed on the image sensor 718 and the microlens 706, so that a unit gap is adjusted to be fixed. In the prior art, optical components (the glass cover 716 and the microlens 706) adjacent to the spacer 714 are bonded by an adhesive. In contrast, in the present application, an adhesive sheet 720 (see FIG. 12) is used as a first adhesive sheet instead of a combination of the spacer and the adhesive.

The adhesive sheet 720 has both a function of the spacer and an adhesive function, and thus productivity of the camera-type optical device is improved. In addition, the adhesive sheet 720 ensures an optical path from the microlens 706 to the image sensor 718 through an opening. Since the adhesive sheet 720 is made of a light-absorbing material such as a black material, an image with reduced ghosting and glare can be obtained by the image sensor 718.

The structure of the adhesive sheet described in the above embodiment can also be applied to an optical device such as a LiDAR sensor unit.

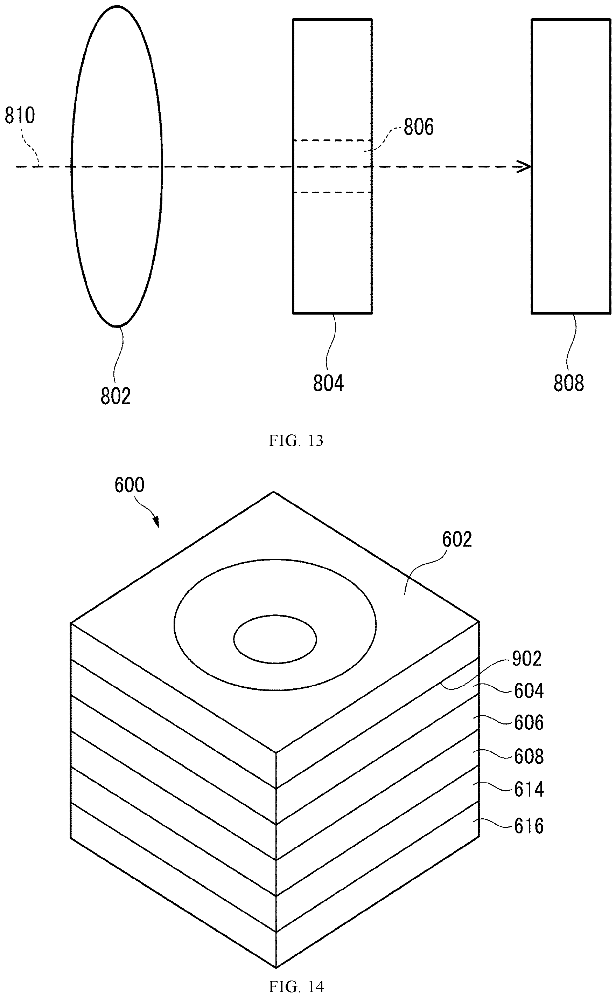

FIG. 13 illustrates an optical device such as a LiDAR sensor unit in the prior art. Light 810 transmitted through a lens 802 passes through an opening 806 of a diaphragm 804 for gathering light and is focused on a light receiving portion 808. The optical device such as a LiDAR sensor unit in the prior art has a structure in which the lens 802, the diaphragm 804, and the light receiving portion 808 are independent of each other. Therefore, the structure of the adhesive sheet described in the above embodiment is also applicable to the diaphragm.

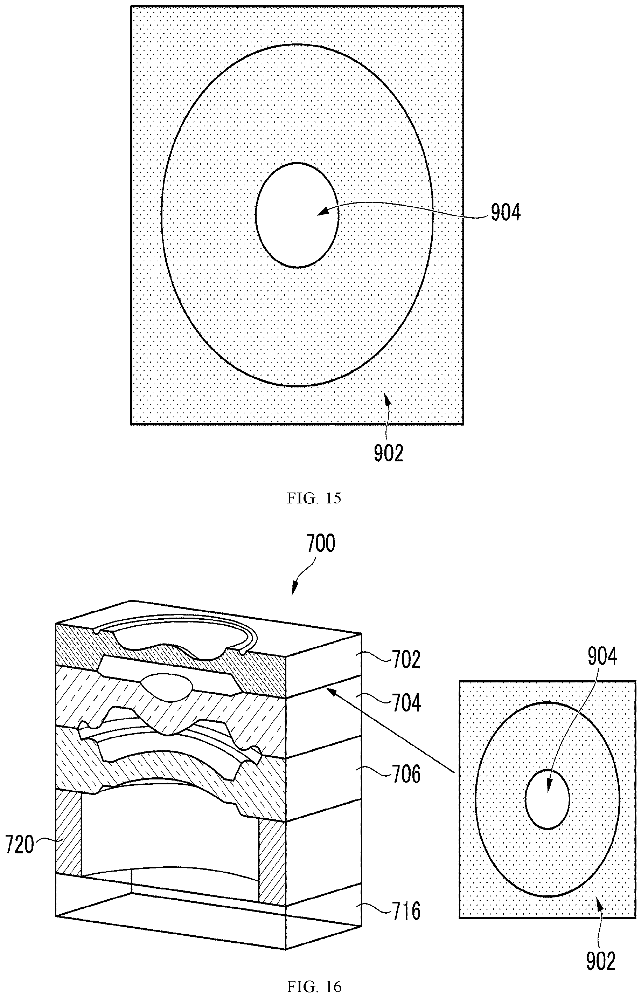

FIG. 14 illustrates an optical device of the present application. The difference from FIG. 11 is that a diaphragm 902 for gathering light is disposed between the microlenses 602 and 604, and that there is no image sensor 618, but other structures are the same as those in FIG. 11, and thus the description thereof is omitted. As illustrated in FIG. 15, an opening 904 is formed in the diaphragm 902. The opening 904 provides an optical path for the microlens. The diaphragm 902 is made of a light-absorbing material such as a black material.

As illustrated in FIG. 14, the diaphragm 902 can attach the microlenses 602 and 604 together. That is, the diaphragm 902 can bond the microlenses 602 and 604 by being disposed between the uppermost microlens 602 of the lens laminate and the microlens 604 adjacent to the uppermost microlens 602.

In addition, since the diaphragm 902 is made of a light-absorbing material such as a black material, the diaphragm 902 has a light shielding function. That is, the adhesive sheet 250B is used as the diaphragm 902.

Therefore, by adopting such a structure, it is possible to provide a diaphragm that achieves both a light shielding function and an adhesive function.

FIG. 16 illustrates the optical device of the present application. The difference from FIG. 12 is that the diaphragm 902 for gathering light is disposed between the microlenses 702 and 704, and that there is no image sensor 718, but other structures are the same as those in FIG. 12, and thus the description thereof is omitted. The diaphragm 902 is made of a light-absorbing material such as a black material, and the adhesive sheet 250B is used as the diaphragm 902.

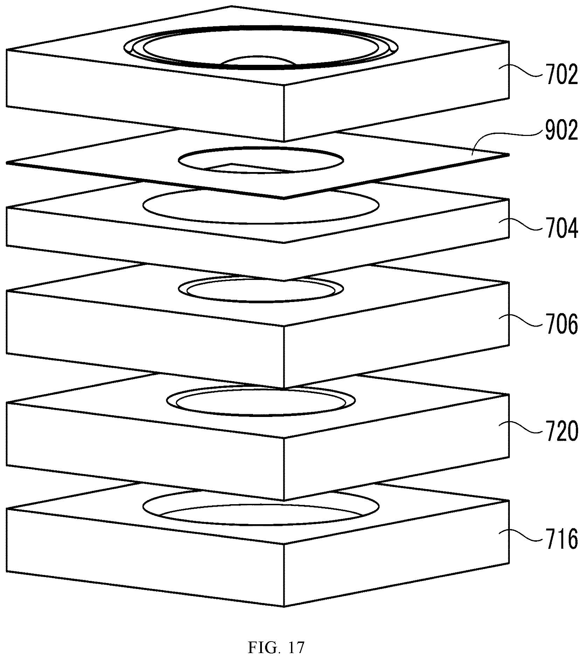

FIG. 17 is a vertically exploded view of the optical device in FIG. 16. The diaphragm 902 is disposed between the uppermost microlens 702 of the lens laminate and the microlens 704 adjacent to the uppermost microlens 702. The diaphragm 902 can bond the microlenses 702 and 704. In addition, the adhesive sheet 720 is used instead of the combination of the spacer and the adhesive. That is, the cover glass 716 and the microlens 706 are bonded by the adhesive sheet 720.

In FIGS. 16 and 17, the adhesive sheet 720 is used as the first adhesive sheet. In addition, in FIGS. 16 and 17, the diaphragm 902 is used as a second adhesive sheet.

Therefore, in the optical device in the prior art, the lens 802, the diaphragm 804 and the light receiving portion 806 are independent structures (see FIG. 13), but by adopting the structure illustrated in FIG. 17, the lens, the diaphragm and the light receiving portion can be integrated. In addition, it is possible to provide a diaphragm that achieves both a light shielding function and an adhesive function.

The optical device illustrated in FIGS. 14 to 17 can be used for a distance sensor used in the LiDAR sensor unit. Therefore, the distance sensor used in the LiDAR sensor unit equipped with the optical device of the present application can have a high light-shielding property. In addition, the distance sensor used in the LiDAR sensor unit equipped with the optical device of the present application can integrate the lens, the diaphragm, and the light receiving portion.

In addition, the distance sensor used in the LiDAR sensor unit equipped with the optical device of the present application preferably has holes of 40 µm at intervals of about 6,000 microlenses. In the traditional photolithography, an optical density (an OD value) is about 2. However, by adopting the structure in which the adhesive sheet is made of a light-absorbing material such as a black material and the holes of 40 µm are formed at intervals of about 6,000 microlenses, the OD value can be made 3 or more.

The above is described in detail, but it will be apparent to those skilled in the art that various changes and improvements can be made within the scope of the present application.

## Claims

1. A microlens array laminate formed by bonding a plurality of microlens arrays, each of the plurality of microlens arrays being obtained by spreading a microlens in a planar shape, wherein
an adhesive sheet is disposed between the bonded microlens arrays, and
the bonded microlens arrays are in surface bonding with the adhesive sheet interposed therebetween.

2. The microlens array laminate according to claim 1, wherein
the adhesive sheet is configured to cover a bonding area, which is an area of the bonded microlens arrays other than an area corresponding to each microlens.

3. The microlens array laminate according to claim 1, wherein
the adhesive sheet is made of a light-absorbing material.

4. The microlens array laminate according to claim 3, wherein
the adhesive sheet is black.

5. An optical device in which a lens laminate is formed by bonding a plurality of types of microlenses, wherein
a first adhesive sheet forming a surface bonding area is disposed between a lowermost microlens of the lens laminate and adjacent optical components,
the first adhesive sheet is made of a light-absorbing material, and
the first adhesive sheet and the adjacent optical components are in surface bonding, and the first adhesive sheet functions as a spacer for adjusting a unit gap.

6. The optical device according to claim 5, wherein
an image sensor is disposed at a bottom of the lens laminate, and
an opening is formed in the first adhesive sheet to ensure an optical path between the lowermost microlens and the image sensor.

7. The optical device according to claim 5, wherein
an image sensor is disposed at a bottom of the lens laminate, and
one of the adjacent optical components is the lowermost microlens, and the other of the adjacent optical components is a glass cover adjacent to the first adhesive sheet and disposed on the image sensor.

8. The optical device according to claim 5, wherein
a second adhesive sheet forming a surface bonding area is disposed between an uppermost microlens of the lens laminate and a microlens adjacent to the uppermost microlens,
the second adhesive sheet is made of a light-absorbing material,
the second adhesive sheet is in surface bonding to the uppermost microlens and the microlens adjacent to the uppermost microlens, and
the second adhesive sheet functions as a diaphragm for gathering light in the optical device.

9. The optical device according to claim 8, wherein
the first adhesive sheet and the second adhesive sheet are black.

10. A LiDAR sensor unit equipped with the optical device according to claim 8.
